# EUROPÄISCHE PATENTSCHRIFT

(11) **EP 2 054 213 B1**
(45) Veröffentlichungstag und Bekanntmachung des Hinweises auf die Patenterteilung: **17.02.2010**
(21) Anmeldenummer: 07801729.0
(22) Anmeldetag: 15.08.2007
(51) Int. Cl.: B29C 47/88, B29C 47/20, B29C 55/28

(54) **SCHLAUCHFOLIENEXTRUSIONSVORRICHTUNG**
BLOWN FILM EXTRUSION DEVICE
DISPOSITIF D'EXTRUSION DE FILM EN MANCHON

(30) Priorität: 23.08.2006 DE 102006039563
(43) Veröffentlichungstag der Anmeldung: 06.05.2009
(73) Patentinhaber: Windmöller & Hölscher KG, 49525 Lengerich (DE)
(72) Erfinder: JOPPE, Markus, 49477 Ibbenbüren (DE); HÜLSMEIER, Werner, 49525 Lengerich (DE)
(74) Vertreter: Schneider, Bernd
(86) Internationale Anmeldenummer: PCT/EP2007/007285
(87) Internationale Veröffentlichungsnummer: WO 2008/022749

(56) Entgegenhaltungen:
- DD-A- 78 368
- DE-U1- 9 214 647
- JP-A- 1 024 725

## Beschreibung

Die Erfindung betrifft eine Schlauchfolienextrusionsvorrichtung mit einem Blaskopf und einem auf dessen Oberseite aufsetzbaren Außenkühlring, der an seiner Unterseite eine ringförmige Auflagefläche aufweist und über Zentriermittel gegenüber dem Blaskopf zentrierbar ist.

Aus der DE 33 36 181 A1 ist eine solche Vorrichtung bekannt. Der sogenannte Blaskopf besitzt einen ringförmigen Düsenspalt, aus dem Kunststoffschmelze austritt. In das Zentrum der Ringdüse wird Luft eingeblasen. Gleichzeitig wird von der Außenseite her mittels eines Außenkühlrings Luft gegen den an der Ringdüse austretenden Folienschlauch geleitet. Der Außenkühlring ist dabei mit einer Ringfläche an seiner Unterseite auf eine Ringfläche an der Oberseite des Blaskopfes aufgelegt, so dass der Außenkühlring leicht angehoben werden kann, um den Zugang zur Ringdüse bei der Wartung zu erleichtern. Problematisch ist hierbei, dass schon geringste Exzentrizitäten oder Schiefstellungen des aufliegenden Außenkühlrings dazu führen, dass die von der Ringdüse abgezogene Folienblase schief gestellt wird, was zu einer ungleichmäßigen Dickenverteilung bei der Folie sowie zu Problemen bei der weiteren Verarbeitung führen kann.

Die bei der bekannten Schlauchfolienextrusionsvorrichtung vorgesehenen Zentriermittel sind Schrauben, die an der Unterseite des Außenkühlrings in radialer Richtung ausgerichtet und in einer Gewindebohrung gelagert sind. Sie können mit ihrer Spitze gegen den Außenumfang eines kreisförmigen Abschnitts im oberen Bereich des Blaskopfes angestellt werden.

Bei einer Schlauchfolienextrusionsvorrichtung gemäß der DE 92 14 647 U1 erfolgt die Zentrierung durch einen kegelstumpfförmigen Absatz am Blaskopf, auf den der Außenkühlring mit einer kegeligen Bohrung aufgesetzt wird.

Weiterhin ist es bekannt, Zentriermittel durch hakenförmige Winkel zu bilden. Durch wenigstens drei Winkel an der Unterseite des Außenkühlrings kann die obere Kante des Blaskopfes umgriffen werden, wodurch der Zentrierring gegenüber dem Blaskopf zentriert wird.

Allen bekannten Schlauchfolienextrusionsvorrichtungen ist gemeinsam, dass ihre Zentriermittel keine temperaturunabhängige Zentrierung erlauben. Eine bei Zimmertemperatur vorgenommene spielfreie Zentrierung von Kühlring und Blaskopf ist im Betrieb nicht wirksam, da die stärkere Erwärmung des Blaskopfes zu einer relativ größeren Ausdehnung als beim Kühlring führt. Auf Zentriermittel, die sich am Außenumfang von Teilen des Blaskopfes abstützen, würden somit erhebliche Druckkräfte wirken. Aus diesem Grund muss bei bekannten Schlauchfolienextrusionsvorrichtungen an jedem Betriebspunkt eine Zentrierung gesondert vorgenommen werden.

Aufgabe der Erfindung ist es daher, eine temperaturunabhängige Zentrierung von Außenkühlring und Blaskopf zu ermöglichen.

Gelöst wird diese Aufgabe bei einem Schlauchfolienwerkzeug der eingangs genannten Art dadurch, dass die Zentriermittel durch wenigstens drei radial angeordnete Linearführungen gebildet sind, welche jeweils eine sich radial erstreckende Ausnehmung und wenigstens ein darin eingreifendes Führungselement umfassen.

Aufgrund der radialen Erstreckung der Linearführungen ist eine unterschiedliche Temperaturdehnung der beiden gegeneinander zu zentrierenden Teile in Umfangsrichtung möglich. Die Temperaturdehnung führt lediglich zu einer Relativverschiebung der Führungselemente innerhalb der Nut in radialer Richtung.

Dadurch, dass wenigstens drei Linearführungen ausgebildet sind, ist eine Zwangszentrierung gegeben, ganz gleich, ob die Führungselemente an der Unterseite des Außenkühlrings oder an der Oberseite des Blaskopfes angeordnet sind, so dass beide Anordnungen möglich sind.

Eine Ausbildung mit vier Nuten, von denen jeweils zwei auf einer gemeinsamen Durchmesserlinie liegen, also miteinander fluchten, vereinfacht die Fertigung und erhöht die Genauigkeit.

Um das Aufsetzen des Kühlrings auf den Blaskopf zu erleichtern, wird eine Selbstzentrierung dadurch bewirkt, dass die Passfederelemente an ihren radial ausgerichteten Seitenkanten angeschrägt sind.

Zusätzlich oder alternativ ist es möglich, die Nuten an deren radial ausgerichteten Seitenkanten anzuschrägen, so dass beim Aufsetzen die Passfederelemente leicht in die Nuten eingleiten.

Anstelle der Passfederelemente können auch Stifte mit kreisrundem Querschnitt als Führungselemente vorgesehen sein. Der Vorteil der Stifte besteht darin, dass nur eine Linienberührung an beiden Flanken der Nut stattfindet und dass damit die Wärmeübertragung vom Blaskopf in das jeweilige Führungselement reduziert ist.

Bei der erfindungsgemäßen Schlauchfolienextrusionsvorrichtung können Nut und Führungselement mit ihren Seitenabmessungen als Spielpassung ausgebildet sein, wobei die Passung so gewählt ist, dass auch bei maximaler Aufheizung des Blaskopfes im Betrieb sowie der gleichzeitigen maximalen Abkühlung des Blaskopfes in jedem Fall ein Gleiten der Führungselemente innerhalb der Nut möglich ist und ein Festklemmen verhindert wird.

Um die Genauigkeit der Zentrierung in allen Betriebszuständen noch zu verbessern, werden folgende Maßnahmen vorgeschlagen:
- Eine Möglichkeit besteht darin, die Führungselemente aus einem Werkstoff herzustellen, der einen gleichartigen WärmeausdehnungsKoeffizienten besitzt wie die Gehäuse der Fügepartner im Bereich der Nuten. Zugleich werden die Führungselemente durch eine thermische Isolierung von dem Bauteil, an dem sie angebracht sind, entkoppelt. In diesem Fall ist eine Rechteckform des Führungselementes vorteilhaft, da so eine längere Linienberührung stattfindet und das Führungselement auf etwa dieselbe Temperatur aufgeheizt wird wie der Nutbereich, in das es eingreift. Folglich dehnen sich Nut und Führungselement im jeweiligen Eingriffspunkt in gleicher Weise aus, so dass eine entsprechend engere Passung gewählt werden kann und somit eine höhere Zentriergenauigkeit erzielt wird.
- Eine weitere mögliche Maßnahme, um das seitliche Spiel einschränken zu können, besteht darin, die Nut entweder ganz V-förmig auszugestalten oder zumindest den Nutgrund V-förmig einzufräsen und zugleich den Führungselementen an ihrer Spitze eine Keilform zu geben. Auch die umgekehrte Anordnung ist möglich, bei der vom Nutgrund eine V-förmige Rippe hoch steht, auf welche eine kompatible Vertiefung an der Spitze des Führungselements passt. Insbesondere, wenn die Keilformen nicht in ihren Winkeln übereinstimmen, wird eine scharf begrenzte Linienberührung erreicht, so dass die radiale Bewegung des Führungselements möglich ist, ohne dass es zu einem Einklemmen des Führungselements in der Nut kommt bzw zu einem Übermaß bei einer umgekehrten Anordnung, welches zu einer Ungenauigkeit führen könnte.

Die Erfindung wird nachfolgend mit Bezug auf die Zeichnung näher erläutert. Die Figuren zeigen im Einzelnen:
- Figur 1: die erfindungsgemäße Schlauchfolienextrusionsvorrichtung in perspektivischer Ansicht,
- Figur 2: eine Draufsicht auf die Unterseite des Außenkühlrings und
- Figur 3: Blaskopf und Außenkühlring in lagerichtiger, perspektivischer Darstellung.

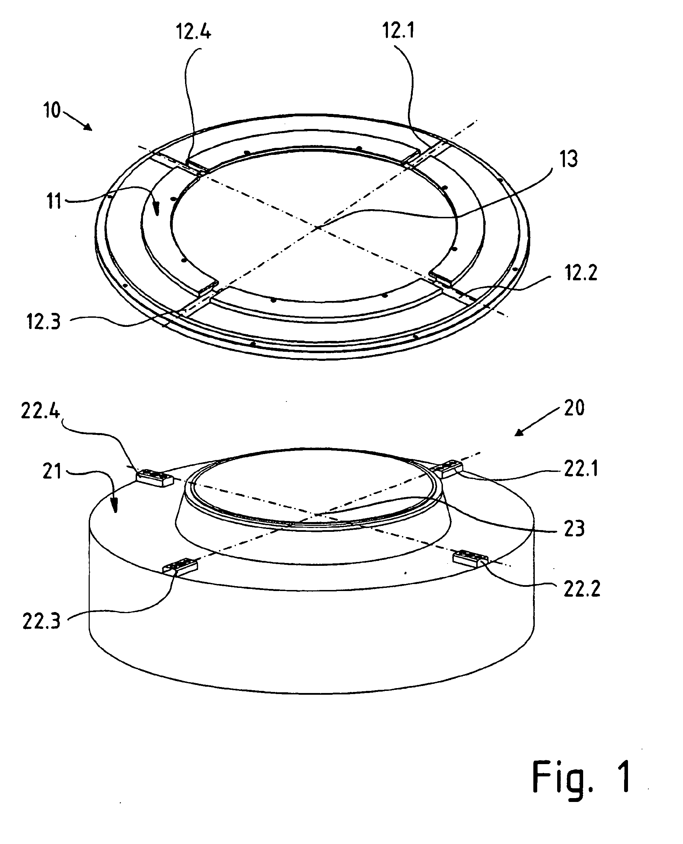

Figur 1 zeigt mit einem Außenkühlring 10 und einem Blaskopf 20 notwendige Grundelemente einer Schlauchfolienextrusionsvorrichtung. Dabei ist der Blaskopf lagerichtig, also mit einer Oberseite nach oben weisend, dargestellt, wo hingegen der auf eine Ringfläche 21 an der Oberseite des Blaskopfes 20 auflegbare Kühlring 10 um 180° gedreht, also auf den Kopf gelegt ist, um den Blick auf die Unterseite und die dort angeordneten Zentrierelemente zu ermöglichen.

Auf der nach oben weisenden und horizontal ausgerichteten Ringfläche 21 des Blaskopfes 20 sind vier Führungselemente in Form von Passfedern 22.1, ..., 22.4 angeordnet, die exakt radial ausgerichtet sind, wie durch die strichpunktierten Durchmesserlinien angedeutet. Am Schnittpunkt der Durchmesserlinien liegen jeweils die zueinander zu zentrierenden Mittelpunkte 13, 23 des Außenkühlrings 10 und des Blaskopfes 20.

An der Unterseite des Außenkühlrings 10 ist eine Kreisringfläche 11 vorhanden, in die vier Nuten 12.1, ..., 12.4 eingebracht sind, die sich genau radial erstrecken. Sowohl die Führungselemente 22.1, ..., 22.4, wie auch die Nuten 12.1, ..., 12.4 sind im dargestellten Ausführungsbeispiel jeweils um exakt 90° zueinander versetzt.

Um Fertigungstoleranzen ausgleichen zu können, sind die Passfedem 22.1, ..., 22.4 zunächst über eine Schraube mit der Ringfläche 21 verbunden und werden dann, nach einer exakten Ausrichtung gegenüber den Nuten 12.1, ..., 12.4 durch Pass-Stifte endgültig in ihrer Lage gegenüber der Ringfläche 21 festgelegt.

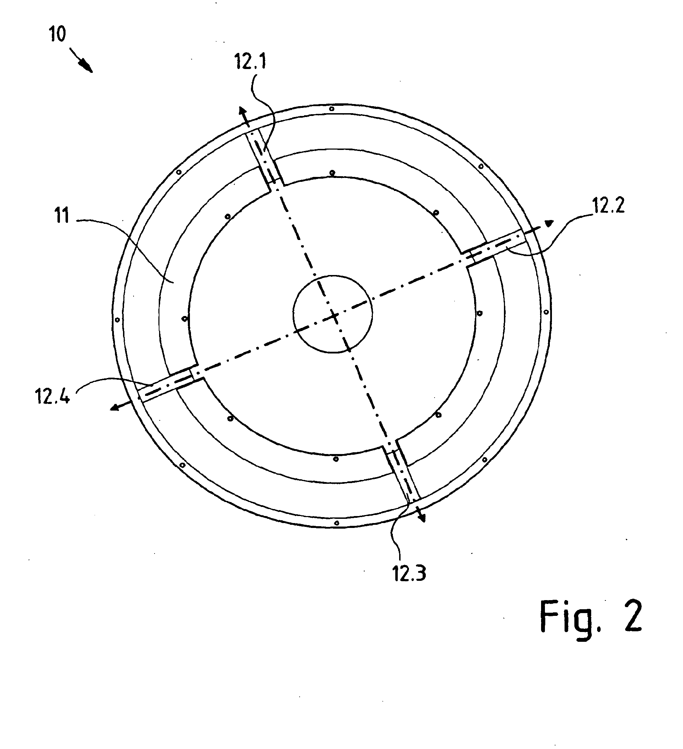

Figur 2 zeigt die Anordnung der Nuten 12.1, ..., 12.4 noch einmal in einer Draufsicht auf die Unterseite mit ihrem ringförmigen, etwas erhabenen Auflagebereich 11. Gegenüberliegende Nuten 12.1, 12.3 bzw. 12.2, 12.4 liegen auf einer Durchmesserlinie, wobei die Durchmesserlinien um 90° versetzt zueinander ausgerichtet sind.

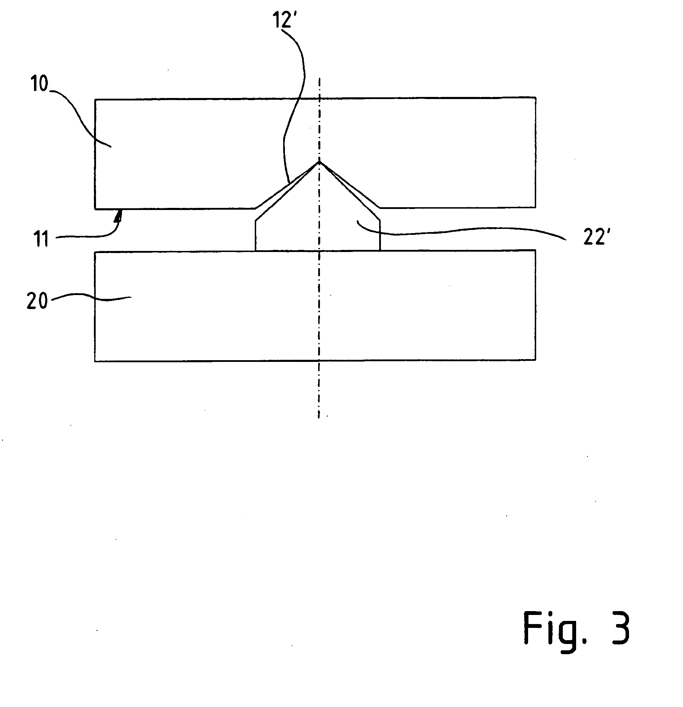

Figur 3 zeigt schematisch den Blick vom Außenumfang her auf einen Außenkühlring 10, der auf einem Blaskopf 20 aufliegt, im Bereich einer Linearführung. Diese ist bei dem hier dargestellten Ausführungsbeispiel wiederum durch eine sich radial erstreckende Vertiefung 12' im Außenkühlring 10 und von der Blaskopfoberseite aufragende Führungselemente 22' gebildet. Die Nut 12' und das Führungselement 22' sind V-förmig bzw. keilförmig ausgebildet. Die eingeschlossenen Winkel sind bei den konvexen Teilen, hier den Führungselementen 22', kleiner als bei den konkaven Teilen, hier den Nuten 12', so dass nur im Bereich der Spitze eine Linienberührung stattfindet.

| **Bezugszeichenliste** | |
|---|---|
| 10 | Außenkühlring |
| 11 | Kreisringfläche |
| 12' | Nut |
| 12.1 | Nut |
| 12.2 | Nut |
| 12.3 | Nut |
| 12.4 | Nut |
| 13 | Zentrierender Mittelpunkt |
| 20 | Blaskopf |
| 21 | Ringfläche |
| 22' | Führungselement |
| 22.1 | Führungselement |
| 22.2 | Führungselement |
| 22.3 | Führungselement |
| 22.4 | Führungselement |
| 23 | Zentrierender Mittelpunkt |
| | |
| | |
| | |
| | |
| | |
| | |
| | |
| | |

## Patentansprüche

1. Schlauchfolienextrusionsvorrichtung mit einem Blaskopf (20) und einem auf dessen Oberseite (21) aufsetzbaren Außenkühlring (10), der an seiner Unterseite eine ringförmige Auflagefläche (11) aufweist und über Zentriermittel gegenüber dem Blaskopf (10) zentrierbar ist,
**dadurch gekennzeichnet, dass**
die Zentriermittel durch wenigstens drei radial angeordnete Linearführungen gebildet sind, welche jeweils eine sich radial erstreckende Ausnehmung (12.1,..., 12. 4) und wenigstens ein darin eingreifendes Führungselement (22.1,..., 22.4) umfassen.

2. Schlauchfolienextrusionsvorrichtung nach Anspruch 1,
**dadurch gekennzeichnet, dass**
die Linearführungen durch Nuten (12.1,..., 12.4) an der Unterseite (11) des Außenkühlrings (10) und darin eingreifende Führungselemente (22.1,...,22.4), die von der Oberseite (21) des Blaskopfes (20) abstehen, gebildet sind.

3. Schlauchfolienextrusionsvorrichtung nach Anspruch 1,
**dadurch gekennzeichnet, dass**
die Linearführungen durch Nuten an der Oberseite des Blaskopfes und darin eingreifende Führungselemente, die von der Unterseite des Außenkühlrings abstehen, gebildet sind.

4. Schlauchfolienextrusionsvorrichtung nach Anspruch 2 oder 3,
**dadurch gekennzeichnet, dass**
die Führungselemente (22.1,...,22.4) durch radial ausgerichtete Passfederelemente gebildet sind.

5. Schlauchfolienextrusionsvorrichtung nach Anspruch 4,
**dadurch gekennzeichnet, dass**
die Passfederelemente (22.1,...,22.4) an ihren radial ausgerichteten Seitenkanten angeschrägt sind.

6. Schlauchfolienextrusionsvorrichtung nach Anspruch 2 oder 3,
**dadurch gekennzeichnet, dass**
die Führungselemente durch Stifte mit kreisrundem Querschnitt gebildet sind.

7. Schlauchfolienextrusionsvorrichtung nach einem der Ansprüche 2 bis 6,
**dadurch gekennzeichnet, dass**
die Nuten (12.1,...,12.4) an ihren radial ausgerichteten Seitenkanten angeschrägt sind.

8. Schlauchfolienextrusionsvorrichtung nach einem der Ansprüche 1 bis 7,
**dadurch gekennzeichnet, dass**
vier Nuten (12.1,...,12.4) vorgesehen sind, von denen jeweils zwei auf einer gemeinsamen Durchmesserlinie liegen.

9. Schlauchfolienextrusionsvorrichtung nach einem der Ansprüche 1 bis 8,
**dadurch gekennzeichnet, dass**
die Führungselemente (22.1,..., 22.4) thermisch entkoppelt angebracht ausgebildet sind.

10. Schlauchfolienextrusionsvorrichtung nach einem der Ansprüche 1 bis 9,
**dadurch gekennzeichnet, dass**
in einem Schnitt quer zur radialen Erstreckung der Nuten (12') zumindest der Nutgrund V-förmig eingetieft ist und die Führungselemente (22') wenigstens an ihrer zum Nutgrund (12') weisenden Außenseite keilförmig ausgebildet sind.

11. Schlauchfolienextrusionsvorrichtung nach einem der Ansprüche 1 bis 9,
**dadurch gekennzeichnet, dass**
in einem Schnitt quer zur radialen Erstreckung der Nuten auf dem Nutgrund zumindest eine V-förmige Rippe ausgebildet ist und die Führungselemente wenigstens an ihrer zum Nutgrund weisenden Außenseite mit einer keilförmigen Nut profiliert sind.

## Claims

1. Blown film extrusion device with a blow head (20) and an outer cooling ring (10) mountable on its top (21), which has an annular support surface (11) on its bottom and can be centred relative to blow head (10) via centring devices,
**characterized by the fact that**
the centring devices are formed by at least three radially arranged linear linear guides, each of which includes a radially extending recess (12.1, ..., 12.4) and at least one guide element (22.1, ..., 22.4) engaging in it.

2. Blown film extrusion device according to claim 1,
**characterized by the fact that**
the linear guides are formed by grooves (12.1 ..., 12.4) on the bottom (11) of the outer cooling ring (10) and guide elements (22.1, ..., 22.4) engaging in it, which protrude from the top (21) of the blow head (20).

3. Blown film extrusion device according to claim 1,
**characterized by the fact that**
the linear guides are formed by grooves on the top of the blow head and guide elements engaging in it, which protrude from the bottom of the outer cooling ring.

4. Blown film extrusion device according to claim 2 or 3,
**characterized by the fact that**
guide elements (22.1, .... 22.4) are formed by radially aligned feather key elements.

5. Blown film extrusion device according to claim 4,
**characterized by the fact that**
the feather key elements (22.1, ..., 22.4) are bevelled on their radially aligned side edges.

6. Blown film extrusion device according to claim 2 or 3,
**characterized by that fact that**
the guide elements are formed by pins with a circular cross section.

7. Blown film extrusion device according to one of the claims 2 to 6.
**characterized by the fact that**
the grooves (12.1, ..., 12.4) are bevelled on their radially aligned side edges.

8. Blown film extrusion device according to one of the claims 1 to 7,
**characterized by the fact that**
four grooves (12.1, ..., 12.4) are provided, two each lying on a common diameter line.

9. Blown film extrusion device according to one of the claims 1 to 8,
**characterized by the fact that**
the guide elements (22.1, ..., 22.4) are designed thermally decoupled.

10. Blown film extrusion device according to one of the claims 1 to 9,
**characterized by the fact that**
in a section across the radial extent of the grooves (12') at least the groove base is recessed V-shaped and the guide elements (22') are designed wedge-shaped at least on their outside facing the groove base (12').

11. Blown film extrusion device according to one of the claims 1 to 9,
**characterized by the fact that**
in a section across the radial extent of the grooves at least one V-shaped rib is formed on the groove base and the guide elements are provided with a wedge-shaped groove at least on their outside facing the groove base.

## Revendications

1. Dispositif d'extrusion de film tubulaire avec une tête de soufflage (20) et une bague de refroidissement extérieure (10) pouvant être placée sur son côté supérieur (21), qui présente à son côté inférieur une face d'application annulaire (11) et peut être centrée par des moyens de centrage par rapport à la tête de soufflage (10),
**caractérisé en ce que**
les moyens de centrage sont formés par au moins trois guidages linéaires disposés radialement, qui comprennent respectivement un évidement (12.1, ..., 12.4) s'étendant radialement et au moins un élément de guidage (22.1, ..., 22.4) s'engageant dans celui-ci.

2. Dispositif d'extrusion de film tubulaire selon la revendication 1,
**caractérisé en ce que**
les guidages linéaires sont formés par des rainures (12.1, ..., 12.4) au côté inférieur (11) de la bague de refroidissement extérieure (10) et d'éléments de guidage (22.1, ..., 22.4) s'engageant dans celles-ci, qui font saillie du côté supérieur (21) de la tête de soufflage (20).

3. Dispositif d'extrusion de film tubulaire selon la revendication 1,
**caractérisé en ce que**
les guidages linéaires sont formés par des rainures au côté supérieur de la tête de soufflage et d'éléments de guidage s'engageant dans celles-ci, qui font saillie du côté inférieur de la bague de refroidissement extérieure.

4. Dispositif d'extrusion de film tubulaire selon la revendication 2 ou 3,
**caractérisé en ce que**
les éléments de guidage (22.1, ..., 22.4) sont formés par des clavettes orientées radialement.

5. Dispositif d'extrusion de film tubulaire selon la revendication 4,
**caractérisé en ce que**
les clavettes (22.1, ..., 22.4) sont chanfreinées à leurs arêtes latérales orientées radialement.

6. Dispositif d'extrusion de film tubulaire selon la revendication 2 ou 3,
**caractérisé en ce que**
les éléments de guidage sont formés par des broches d'une section transversale circulaire.

7. Dispositif d'extrusion de film tubulaire selon l'une des revendications 2 à 6,
**caractérisé en ce que**
les rainures (12.1, ..., 12.4) sont chanfreinées à leurs arêtes latérales orientées radialement.

8. Dispositif d'extrusion de feuille tubulaire selon l'une des revendications 1 à 7,
**caractérisé en ce que**
quatre rainures (12.1, ..., 12.4) sont prévues dont respectivement deux se situent sur une ligne diamétrale commune.

9. Dispositif d'extrusion de film tubulaire selon l'une des revendications 1 à 8,
**caractérisé en ce que**
les éléments de guidage (22.1, ..., 22.4) sont réalisés en étant disposés de façon thermiquement découplée.

10. Dispositif d'extrusion de film tubulaire selon l'une des revendications 1 à 9,
**caractérisé en ce qu'**en
coupe transversale à l'extension radiale des rainures (12'), au moins le fond de rainure est réalisé en forme de V, et les éléments de guidage (22') sont réalisés en forme de coin au moins à leur côté extérieur dirigé vers le fond de rainure (12').

11. Dispositif d'extrusion de film tubulaire selon l'une des revendications 1 à 9,
**caractérisé en ce qu'**en
coupe transversale à l'extension radiale des rainures, il est réalisé sur le fond de rainure au moins une nervure en forme de V, et les éléments de guidage sont profilés au moins à leur côté extérieur dirigé vers le fond de rainure avec une rainure en forme de coin.
